# FASCICULE DE BREVET EUROPEEN

(11) **EP 1 355 814 B1**
(45) Date de publication et mention de la délivrance du brevet: **13.01.2010**
(21) Numéro de dépôt: 01997430.2
(22) Date de dépôt: 21.11.2001
(51) Int. Cl.: B60T 13/565

(54) **DISPOSITIF DE FREINAGE ASSISTE A VALVE D'URGENCE**
BREMSKRAFTVERSTÄRKUNGSVORRICHTUNG MIT SICHERHEITSVENTIL
BRAKE BOOSTER DEVICE WITH EMERGENCY VALVE

(30) Priorité: 24.11.2000 FR 0015303
(43) Date de publication de la demande: 29.10.2003
(73) Titulaire: ROBERT BOSCH GMBH, 70442 Stuttgart (DE)
(72) Inventeur: ATTARD, Jean-Marc, F-60500 CHANTILLY (FR)
(74) Mandataire: Hurwic, Aleksander Wiktor
(86) Numéro de dépôt international: PCT/FR2001/003654
(87) Numéro de publication internationale: WO 2002/042139

(56) Documents cités:
- DE-A- 4 429 439
- FR-A- 2 724 354
- US-A- 5 934 075

## Description

L'invention est relative à un dispositif de freinage assisté, pour véhiculé à moteur, du type de ceux qui comprennent un maître-cylindre commandant la pression dans au moins un circuit de freinage, un piston primaire monté coulissant dans le maître-cylindre pour y créer une variation de pression, ce piston primaire étant soumis à une force d'actionnement se composant d'une force d'entrée exercée par un organe de commande manuelle et d'une force d'assistance exercée par un servomoteur d'assistance qui est couplé à l'organe de commande manuelle.

Le servomoteur d'assistance peut être pneumatique et comprendre une enveloppe rigide séparée en deux chambres pneumatiques par une cloison mobile qui peut être soumise à une différence de pression entre les chambres sous l'action d'une valve actionnée par l'organe de commande manuelle.

Un dispositif de freinage de ce type est connu, par exemple d'après EP-B-0 662 894.

Les conditions dans lesquelles le freinage est exercé peuvent différer. Un premier cas correspond à des conditions ordinaires lorsqu'un obstacle est vu de loin et que le freinage est exercé relativement doucement ; ce freinage est appelé "freinage normal" ou "freinage lent". Un autre cas est celui d'un freinage brusque ou "freinage d'urgence", par exemple lorsqu'un obstacle surgit brutalement devant le conducteur qui doit arrêter son véhicule le plus vite possible.

En vue de satisfaire à ces différentes conditions de freinage, un dispositif de freinage assisté, du type défini précédemment, a été complété par une valve d'assistance d'urgence propre à faire intervenir au moins deux rapports d'assistance correspondant respectivement à un freinage lent et à un freinage d'urgence ; le rapport d'assistance pour le freinage lent est plus faible et la réaction hydraulique opposée à l'avance de l'organe de commande manuelle est plus forte. Pour le freinage d'urgence, le rapport d'assistance est plus fort et la réaction hydraulique à l'encontre de l'organe de commande manuelle est plus faible, de sorte que le conducteur peut freiner plus longtemps et plus fort.

Par convention, dans la suite du texte on désignera par le terme "avant" un sens orienté depuis l'organe de commande vers le maître-cylindre et par le terme "arrière" le sens opposé.

La valve d'assistance d'urgence comporte un piston de réaction qui coulisse de manière étanche dans un alésage du piston primaire, la partie avant de cet alésage communiquant avec le volume intérieur du maître-cylindre, un piston rapide de section inférieure à celle du piston de réaction coulissant de manière étanche dans un alésage de diamètre correspondant du piston primaire, et une commande de rapport actionnée par un distributeur plongeur lui-même entraîné par l'organe de commande manuelle, l'ensemble étant agencé pour que, lors d'un freinage d'urgence, la réaction hydraulique ne s'exerce que sur la petite section de ce piston rapide. Le rapport d'assistance lent fait intervenir le piston de réaction, de plus forte section.

Un tel dispositif de freinage avec valve d'assistance d'urgence donne entière satisfaction au point de vue fonctionnement et effort de freinage. Toutefois, les réalisations proposées jusqu'à ce jour pour la valve d'assistance d'urgence sont relativement encombrantes avec un nombre de pièces relativement élevé entraînant un coût de fabrication non négligeable.

L'invention a pour but, surtout, de fournir un dispositif de freinage avec valve d'assistance d'urgence plus compacte et d'un coût de fabrication réduit.

Selon l'invention, un dispositif de freinage assisté, pour véhicule à moteur, du type défini précédemment, comportant une valve d'assistance d'urgence, est caractérisé par le fait que le piston de réaction et le piston rapide forment un seul et même piston étagé présentant une partie de grande section (piston de réaction) et une partie de petite section (piston rapide), la partie de grande section déterminant avec l'alésage correspondant du piston primaire une chambre annulaire de volume variable selon le déplacement du piston étagé relativement au piston primaire, et que des moyens de séparation / communication, commandés par le déplacement du piston étagé, sont prévus pour que la pression du liquide s'exerce efficacement sur la grande section du piston étagé lorsque ce dernier occupe sa position de repos ou se trouve en arrière de cette position, et sur la seule petite section lorsque le piston étagé s'est déplacé vers l'avant relativement au piston primaire, lors d'un freinage d'urgence.

La partie de grande section du piston étagé peut se trouver vers l'avant et la partie de petite section vers l'arrière. La partie de petite section peut comporter un épaulement contre lequel vient en appui axial une rondelle servant d'appui à un ressort de compression dont l'autre extrémité est en appui contre une butée ancrée dans un logement du piston primaire.

Un moyen de séparation entre grande et petite section du piston étagé peut être lié au piston primaire. Un alésage borgne est avantageusement prévu dans le piston étagé et ouvert vers l'avant, cet alésage borgne communiquant vers son extrémité intérieure par au moins un trou avec la périphérie du piston de petite section, tandis qu'un moyen d'étanchéité, lié au piston primaire, est prévu dans la chambre annulaire, autour du piston de petite section pour coopérer avec le(s) trou(s) du piston de petite section. Lorsque le(s) trou(s) se trouve(nt) en arrière du moyen d' étanchéité, la partie avant de la chambre annulaire est isolée de la pression hydraulique du maître-cylindre, de sorte que cette pression agit efficacement sur toute la surface de la grande section, tandis que lorsque le(s) trou(s) se trouve(nt) en avant du moyen d'étanchéité, la pression hydraulique s'exerce dans la partie avant de la chambre annulaire de sorte que cette pression n'est efficace que sur la seule petite section. Le moyen d'étanchéité est avantageusement constitué par un joint à lèvre.

De préférence, le piston de petite section se prolonge vers le distributeur plongeur par une tige de plus petit diamètre formant la commande de rapport. Un espace libre peut exister au repos entre l'extrémité arrière de la tige et le distributeur plongeur.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif. Sur ces dessins:
Fig.1 est une vue partielle en coupe avec parties arrachées, d'un dispositif de freinage selon l'invention ;
Fig.2 est une vue partielle en coupe, à plus grande échelle, d'éléments de Fig.1 et de la valve d'assistance d'urgence, le dispositif de freinage étant en position de repos ;
Fig.3, enfin, montre semblablement à Fig.2 les éléments en début de freinage rapide.

La structure d'ensemble et le fonctionnement général d'un dispositif de freinage assisté du type de l'invention sont connus, notamment d'après les brevets EP-B-0 662 894 ou FR-B-2 658 466, et ne seront que succinctement rappelés. Pour plus de détails, on pourra se reporter aux deux brevets cités, incorporés à la description par référence.

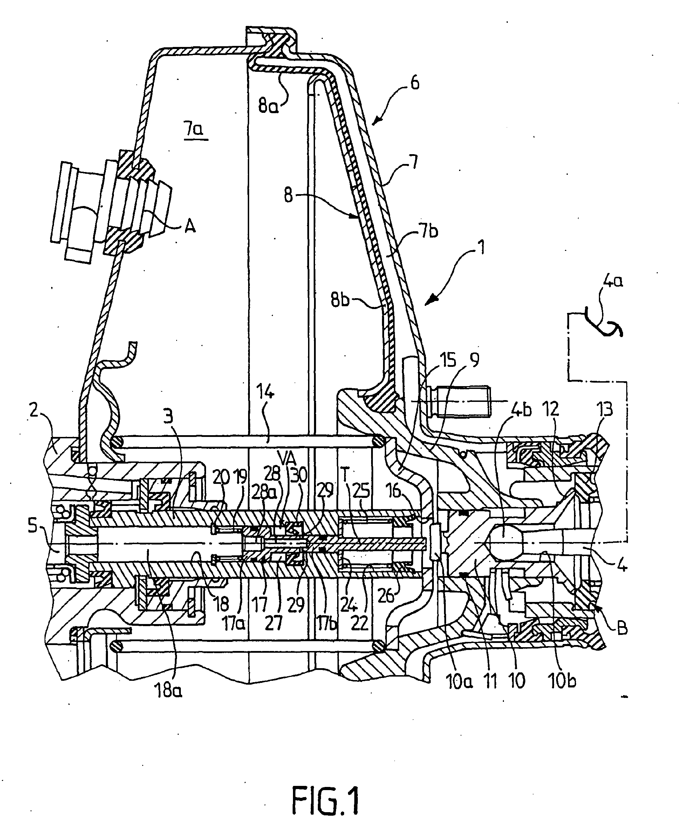

Sur Fig.1, on peut voir un dispositif de freinage 1 pour véhicule automobile qui comprend un maître-cylindre 2 partiellement représenté et un piston primaire 3 monté coulissant dans le maître-cylindre 2. Un organe de commande manuelle 4 comprenant une tringle coaxiale au piston primaire 3 est prévu pour exercer sur ce piston une force d'entrée de l'arrière vers l'avant, c'est-à-dire de la droite vers la gauche selon la représentation de Fig.1. Le déplacement du piston primaire 3 vers l'avant crée une augmentation de pression du liquide dans le volume intérieur 5. du maître-cylindre, relié à au moins un circuit hydraulique de freinage. L'organe de commande 4 est généralement actionné par une pédale de frein 4a schématiquement représentée.

Un servomoteur d'assistance pneumatique 6 est couplé à l'organe de commande 4. Le servomoteur 6 comprend une enveloppe rigide 7 séparée intérieurement de manière étanche en deux chambres pneumatiques 7a, 7b par une cloison mobile 8 comprenant une membrane 8a en matière élastomère et une jupe rigide 8b. La chambre 7a est reliée en permanence à une source de dépression (non représentée) par un ajutage A. Un piston pneumatique 9 en forme de manchon coaxial au piston primaire 3 est fixé à la jupe rigide 8b. Le piston pneumatique 9 est monté coulissant, de manière étanche; sur un distributeur plongeur 10, de forme globalement cylindrique. L'étanchéité est assurée par un joint torique 11.

Le distributeur plongeur 10 comporte vers l'avant une tête 10a et , vers l'arrière, un logement borgne axial 10b, ouvert vers l'arrière, qui reçoit une rotule 4b prévue à l'extrémité de la tringle 4. Le distributeur plongeur 10 comporte, du côté opposé au piston 3, un épanouissement tronconique 12 qui peut venir en appui de manière étanche contre une bague 13 en matière élastomère liée en translation axiale au piston pneumatique 9. L'ensemble 12, 13 constitue une partie d'une valve trois voies B (partiellement représentée) qui permet soit d'isoler la chambre 7b de l'atmosphère et de mettre en communication les chambres 7a, 7b, soit d'isoler les chambres 7a, 7b l'une de l'autre et d'admettre de l'air à pression atmosphérique dans la chambre 7b lorsque l'épanouissement 12 s'écarte axialement de la bague 13.

Le piston pneumatique 9 est rappelé vers sa position de repos, représentée sur Fig.1, par un ressort de compression 14 disposé entre le piston 9 et la paroi opposée de l'enveloppe 7 sur laquelle est fixé le maître-cylindre 2. Une cuvette 15 comportant une ouverture centrale 16 est en appui axial par son bord périphérique extérieur contre un épaulement du piston pneumatique 9. Le ressort 14 applique le bord de cette cuvette contre le piston 9. La cuvette 15 est en appui axial, par le bord intérieur entourant son ouverture 16, contre l'extrémité arrière du piston primaire 3. Le diamètre extérieur de la tête 10a est inférieur au diamètre de l'ouverture 16.

Une valve d'assistance d'urgence VA est prévue pour faire intervenir au moins deux rapports d'assistance correspondant respectivement à un freinage normal (lent) et à un freinage d'urgence.

La valve VA comprend un seul piston étagé 17 présentant une partie de grande section 17a située vers l'avant et constituant un piston de réaction, et une partie de petite section 17b située en arrière, constituant un piston rapide.

La partie 17a est montée coulissante de manière étanche grâce à un joint torique, dans un alésage 18 du piston primaire 3. La partie avant 18a de cet alésage communique avec le volume intérieur 5 du maître-cylindre. Un ressort de compression en hélice 19 prend appui contre la face avant de la partie 17a et contre une bague fendue 20 ancrée dans une gorge de l'alésage 18, en avant de la partie 17a. Le ressort 19 pousse le piston étagé 17 vers l'arrière. La partie arrière 17b du piston étagé, coulisse dans un alésage 18b de diamètre correspondant, de manière étanche grâce à un joint torique. L'alésage 18b est coaxial à l'alésage principal 18 qu'il prolonge vers l'arrière. L'entrée de l'alésage 18b comporte un chanfrein tronconique 18c. La partie 17b est prolongée, vers l'arrière, par une tige T coaxiale de plus faible diamètre formant la commande de rapport . Un épaulement 21 marque la transition entre la partie 17b et la tige T. La tige T traverse un alésage 22, de diamètre supérieur à l'alésage 18, qui fait suite à l'alésage 18b vers l'arrière et s'ouvre vers la tête 10a contre laquelle la tige T peut venir en appui. Au repos, un jeu axial de l'ordre du millimètre ou de quelques millimètres peut exister entre l'extrémité arrière de la tige T et la tête 10a. La transition entre l'alésage 18b et l'alésage 22 est marquée par un épaulement radial 23 formant le fond de l'alésage 22. Une rondelle 24 est engagée autour de la tige T. Cette rondelle 24 comporte un trou central dont le diamètre est égal, au jeu de coulissement près, à celui de la tige T. Le bord du trou intérieur de la rondelle 24 peut être arrêté par l'épaulement 21. Le diamètre extérieur de la rondelle 24 est inférieur au diamètre de l'alésage 22.

Un ressort hélicoïdal de compression 25 est disposé entre la rondelle 24 et une butée arrière formée par une bague encliquetable 26, par exemple en matière plastique, ancrée dans la paroi intérieure de l'alésage 22.

La partie 17a de grande section du piston étagé 17 détermine, avec le fond 18d de la partie de grande section de l'alésage 18, une chambre annulaire 27 dont le volume varie selon le déplacement du piston étagé 17 relativement au piston primaire 3.

Un alésage borgne 28 est percé axialement dans le piston étagé 17 et s'ouvre du côté du maître-cylindre 2 suivant une entrée 28a de plus grand diamètre.

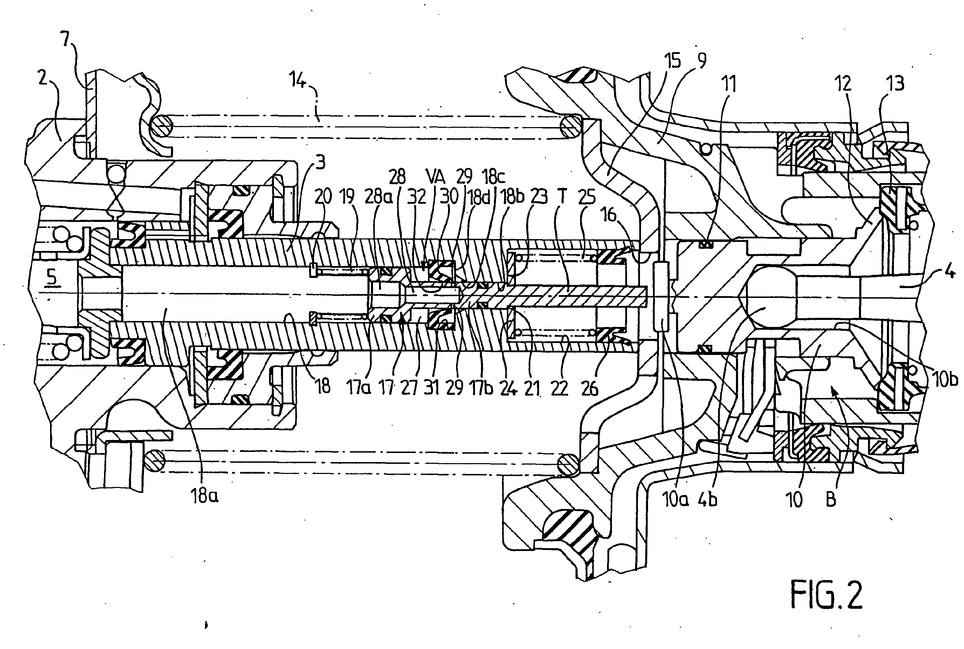

L'alésage borgne 28 se prolonge dans la partie 17b de petite section du piston 17. A proximité du fond de l'alésage 28, des trous 29 orientés radialement mettent en communication l'alésage borgne 28 avec la périphérie de la partie 17b. La longueur de l'alésage 28 et la position axiale des trous 29 est telle que lorsque le piston 17 occupe la position de repos représentée sur Fig.1 et Fig.2, les trous 29 se trouvent juste en avant du fond 18d de la partie de grande section de l'alésage 18.

Un joint à lèvre 30 présentant une élasticité et une rigidité suffisantes, par exemple en matière élastomère, est logé dans une gorge annulaire 31 prévue dans l'alésage 18 du piston primaire 3. Le joint 30, lié au piston 3, est en appui axial contre le fond 18d. La lèvre 32 du joint 30 détermine une surface tronconique, constituant une sorte d'entonnoir, dont la petite base est tournée vers le fond 18d. La lèvre 32 s'appuie de manière étanche contre la surface extérieure de la partie 17b de petite section du piston étagé. L'extrémité arrière de la lèvre 32 se trouve en avant des trous 29 lorsque le piston étagé 17 est dans la position de repos des Figs.1 et 2.

Le joint à lèvre 30 est prévu pour résister à la pression hydraulique qui peut s'exercer derrière lui et pour empêcher la transmission de cette pression dans la partie de la chambre 27 située en avant du joint 30. Par contre, en cas d'augmentation de la pression dans la partie avant de la chambre 27, la lèvre 32 du joint 30 peut se déformer et s'écarter radialement de la partie 17b pour laisser passer du liquide et permettre une diminution de pression.

Un déplacement vers l'avant du piston étagé 17 relativement au piston primaire 3 fait passer les trous 29 d'arrière en avant de la zone de contact de la lèvre 32 avec la surface extérieure de la partie 17b.

L'ensemble du joint à lèvre 30 et des trous 29 constitue une sorte de clapet anti-retour permettant l'écoulement de liquide dans un sens et bloquant cet écoulement dans l'autre sens. Le joint 30 et les trous 29 sont un exemple, non limitatif, de moyens de séparation / communication entre la partie de grande section 17a et la partie de petite section 17b du piston 17 avec alimentation ou évacuation de la chambre annulaire 27 commandée par le déplacement du piston étagé 17. Tout dispositif équivalent à la combinaison du joint 30 et des trous 29 peut être utilisé.

Ceci étant, le fonctionnement du dispositif de freinage reste classique et ne sera que brièvement rappelé.

Dans le cas d'un freinage normal, l'organe de commande manuelle 4 est déplacé, relativement lentement, vers la gauche. La valve B est actionnée et coupe d'abord la communication entre les chambres 7a et 7b, puis l'épanouissement tronconique 12 s'écarte de la bague élastique 13, ce qui assure l'admission d'air à la pression atmosphérique dans la chambre 7b du servomoteur pneumatique 6. La cloison mobile 8 transmet la force d'assistance au piston pneumatique 9 qui se déplace vers l'avant à l'encontre du ressort 14. Le piston 9 entraîne la cuvette 15 qui pousse le piston primaire 3 vers l'avant. La pression du liquide augmente dans le volume 5 ainsi que dans l'alésage 18 et dans le volume situé derrière le joint 30, ce volume communiquant par les trous 29 avec l'alésage borgne 28 et l'alésage 18. Le joint 30 s'oppose à la transmission de la pression dans la partie avant de la chambre 27.

La pression de liquide sur la partie de grande section 17a du piston 17 engendre un effort vers l'arrière. Lorsque cet effort atteint et dépasse la précontrainte du ressort 25, le piston étagé 17 recule en poussant la rondelle 24 à l'encontre du ressort 25 jusqu'à ce que la tige T vienne en butée contre la tête 10a.

Cette phase correspond à une phase de saut, au cours de laquelle aucune réaction ne s'oppose à l'avance de l'organe 4, tandis qu'une diminution du volume de la chambre 27 se produit; une augmentation éventuelle de la pression dans cette chambre 27 est limitée car la lèvre 32 permet un écoulement vers l'arrière.

Sous l'action de la force d'entrée sur l'organe 4, le distributeur plongeur 10 continue son déplacement vers l'avant; le piston pneumatique 9 suit le distributeur plongeur 10 et pousse le piston primaire 3 avec la force d'assistance.

Lorsque la saturation (force d'assistance maximale) est atteinte, la forcé d'entrée manuelle exercée sur l'organe 4 est transmise mécaniquement au piston primaire 3 et permet d'assurer l'augmentation de la pression de freinage.

Au cours d'un freinage normal, les trous 29 restent en arrière de la lèvre 32. La pression du liquide dans l'alésage 18 s'exerce sur toute la section de la partie 17a puisque le joint 30 empêche l'apparition d'une contre-pression sur la zone annulaire arrière de la tête 17a autour de la partie 17b. La réaction hydraulique qui s'oppose à l'avance du distributeur plongeur 10 et de l'organe 4 est relativement forte.

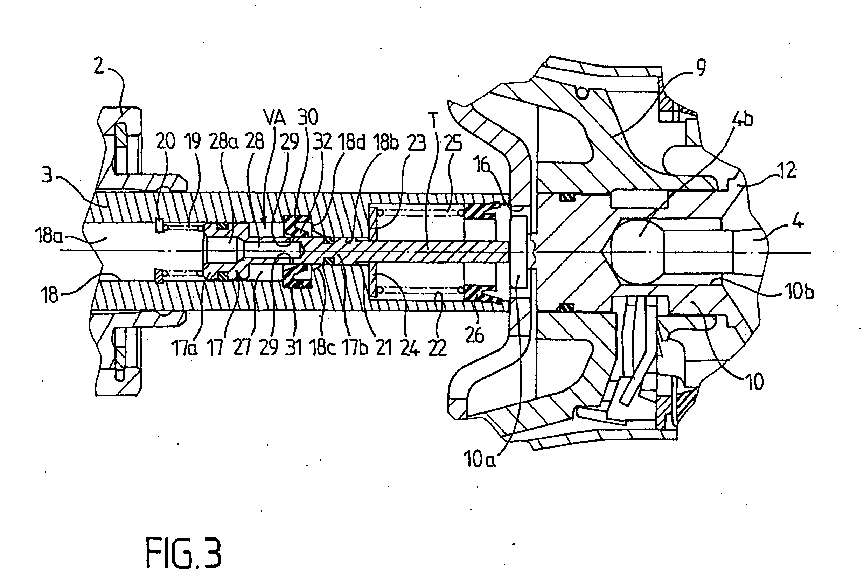

Dans le cas d'un freinage rapide (Fig.3), le distributeur plongeur 10 se déplace, initialement, plus rapidement que le piston pneumatique 9 et que le piston primaire 3. La tête 10a vient au contact de la tige T et la pousse. Le piston étagé 17 est déplacé vers l'avant par rapport au piston primaire 3, en comprimant le ressort 19.

Les trous 29 vont passer d'arrière en avant de la lèvre 32 de sorte que la pression du liquide dans l'alésage 18 est transmise, par les trous 29, à la partie de la chambre 27 située en avant du joint 30.

Ainsi, la pression hydraulique ne sera efficace, c'est à dire n'exercera une poussée vers l'arrière, que sur la petite section 17b . La réaction sur le piston étagé 17 est donc réduite. Cette réaction plus faible que dans le cas du freinage normal permet d'obtenir en un temps minimal une pression de freinage élevée.

La valve d'assistance d'urgence VA conforme à l'invention est compacte et comporte un nombre réduit de pièces, ce qui permet de diminuer son coût de fabrication.

## Revendications

1. Dispositif de freinage assisté, pour véhicule à moteur, comprenant : un maître-cylindre (2) commandant la pression dans au moins un circuit de freinage; un piston primaire (3) monté coulissant dans le maître-cylindre pour y créer une variation de pression, ce piston primaire étant soumis à une force d'actionnement se composant d'une force d'entrée exercée par un organe de commande manuelle (4) et d'une force d'assistance exercée par un servomoteur d'assistance (6) qui est couplé à l'organe de commande manuelle; une valve d'assistance d'urgence (VA) comportant un piston de réaction (17a) qui coulisse de manière étanche dans un alésage (18) du piston primaire, la partie avant (18a) de cet alésage communiquant avec le volume intérieur (5) du maître-cylindre, un piston rapide (17b) de section inférieure à celle du piston de réaction coulissant de manière étanche dans un alésage (18b) de diamètre correspondant du piston primaire, et une commande de rapport (T) actionnée par un distributeur plongeur (10) lui-même entraîné par l'organe de commande manuelle (4), l'ensemble étant agencé pour que, lors d'un freinage d'urgence, la réaction hydraulique ne s'exerce que sur la petite section du piston rapide,
**caractérisé par le fait que** le piston de réaction (17a) et le piston rapide (17b) forment un seul et même piston étagé (17) présentant une partie de grande section (17a) et une partie de petite section (17b), la partie de grande section (17a) déterminant avec l'alésage correspondant (18) du piston primaire une chambre annulaire (27) de volume variable selon le déplacement du piston étagé (17) relativement au piston primaire (3), et que des moyens de séparation /communication (28,29,30) commandés par le déplacement du piston étagé (17) sont prévus pour que la pression du liquide s'exerce sur la grande section (17a) du piston étagé lorsque ce dernier occupe sa position de repos ou se trouve en arrière de cette position, et sur la seule petite section (17b) lorsque le piston étagé s'est déplacé vers l'avant relativement au piston primaire (3), lors d'un freinage d'urgence.

2. Dispositif de freinage selon la revendication 1, **caractérisé par le fait que** les moyens de séparation / communication comprennent un moyen de séparation (30), entre grande et petite section, lié au piston primaire (3).

3. Dispositif de freinage selon la revendication 1 ou 2 , **caractérisé par le fait que** les moyens de séparation / communication comprennent un alésage borgne (28) prévu dans le piston étagé et ouvert vers l' avant, cet alésage borgne communiquant, vers son extrémité intérieure, par au moins un trou (29) avec la périphérie du piston de petite section (17b), tandis qu'un moyen d'étanchéité (30) lié au piston primaire (3) est prévu dans la chambre annulaire (27), autour du piston de petite section (17b) pour coopérer avec le(s) trou(s) (29) du piston de petite section.

4. Dispositif de freinage selon la revendication 3, **caractérisé par le fait que** le moyen d'étanchéité est constitué par un joint (30) à lèvre (32).

5. Dispositif de freinage selon l'une des revendications 1 à 4, **caractérisé par le fait que** la partie de grande section (17a) du piston étagé se trouve vers l'avant et la partie de petite section (17b) vers l'arrière.

6. Dispositif de freinage selon la revendication 5, **caractérisé par le fait que** la partie de petite section (17b) comporte un épaulement (21) contre lequel peut venir en appui axial une rondelle (24) servant d'appui à un ressort de compression (25) dont l'autre extrémité est en appui contre une butée (26) ancrée dans un logement (22) du piston primaire.

7. Dispositif de freinage selon l'une des revendications précédentes, **caractérisé par le fait que** le piston de petite section (17b) se prolonge vers le distributeur plongeur (10) par une tige (T) de plus petit diamètre.

8. Dispositif de freinage selon la revendication 7, **caractérisé par le fait qu'**un espace libre existe au repos entre l'extrémité arrière de la tige (T) et le distributeur plongeur (10).

9. Dispositif de freinage selon l'une des revendications précédentes, **caractérisé par le fait qu'**un ressort de compression (19) prend appui contre la partie de grande section (17a) du piston étagé (17) et contre une bague fendue (20) ancrée dans une gorge de l'alésage (18) du piston primaire (3).

## Claims

1. Boosted braking device, for a motor vehicle, comprising: a master cylinder (2) controlling the pressure in at least one brake circuit; a primary piston (3) mounted to slide in the master cylinder to create therein a variation in pressure, this primary piston being subjected to an actuating force made up of an input force exerted by a manual-control member (4) and of a boost force exerted by a booster (6) which is coupled to the manual-control member; an emergency assist valve (VA) comprising a reaction piston (17a) which slides in a sealed manner in a bore (18) of the primary piston, the front part (18a) of this bore communicating with the interior volume (5) of the master cylinder, a rapid piston (17b) of cross section smaller than that of the reaction piston sliding in a sealed manner in a bore (18b) of corresponding diameter of the primary piston, and a ratio control (T) actuated by a plunger distributor (10) itself driven by the manual-control member (4), the assembly being arranged in such a way that under emergency braking, the hydraulic reaction is exerted only on the small cross section of the rapid piston,
**characterized in that** the reaction piston (17a) and the rapid piston (17b) form one and the same stepped piston (17) having a part (17a) of large cross section and a part (17b) of small cross section, the large-section part (17a) determining, with the corresponding bore (18) of the primary piston, an annular chamber (27), the volume of which varies according to the displacement of the stepped piston (17) relative to the primary piston (3), and that separation/communication means (28, 29, 30), controlled by the displacement of the stepped piston (17) are designed so that the pressure of the liquid is exerted on the large cross section (17a) of the stepped piston when the latter occupies its position of rest or is to the rear of this position, and on only the small cross section (17b) when the stepped piston is displaced forward relative to the primary piston (3) under emergency braking.

2. Braking device according to Claim 1, **characterized in that** the separation/communication means comprise a means of separation (30) between large and small cross section, connected to the primary piston (3).

3. Braking device according to Claim 1 or 2, **characterized in that** the separation/communication means comprise a blind bore (28) provided in the stepped piston and open forward, this blind bore communicating, toward its interior end, via at least one hole (29), with the periphery of the small-section piston (17b), while a sealing means (30), connected to the primary piston (3), is provided in the annular chamber (27), around the small-section piston (17b), to collaborate with the hole(s) (29) in the small-section piston.

4. Braking device according to Claim 3, **characterized in that** the sealing means consists of a lip seal (30) of lip (32).

5. Braking device according to one of Claims 1 to 4, **characterized in that** the large-section part (17a) of the stepped piston lies toward the front and the small-section part (17b) lies toward the rear.

6. Braking device according to Claim 5, **characterized in that** the small-section part (17b) comprises a shoulder (21) against which there may bear axially a washer (24) acting as a thrust washer for a compression spring (25), the other end of which bears against a stop piece (26) anchored in a housing (22) of the primary piston.

7. Braking device according to any one of the preceding claims, **characterized in that** the small-section piston (17b) is extended toward the plunger distributor (10) by a rod (T) of smaller diameter.

8. Braking device according to Claim 7,
**characterized in that** a gap exists at rest between the rear end of the rod (T) and the plunger distributor (10).

9. Braking device according to one of the preceding claims, **characterized in that** a compression spring (19) bears against the large-section part (17a) of the stepped piston (17) and against a split ring (20) anchored in a groove of the bore (18) of the primary piston (3).

## Patentansprüche

1. Vorrichtung zur unterstützten Bremsung für ein Kraftfahrzeug, mit einem Hauptzylinder (2), der den Druck in mindestens einem Bremskreis steuert; einem Primärkolben (3), der gleitend im Hauptzylinder angebracht ist, um dort eine Druckänderung zu erzeugen, wobei dieser Primärkolben einer Betätigungskraft ausgesetzt ist, die sich aus einer Eingangskraft, die von einem Organ (4) zur manuellen Steuerung ausgeübt wird, und einer Unterstützungskraft zusammensetzt, die von einem an das Organ zur manuellen Steuerung gekoppelten Unterstützungsservomotor (6) ausgeübt wird; einem Unterstützungsnotventil (VA) mit einem Reaktionskolben (17a), der in dichter Weise in einer Bohrung (18) des Primärkolbens gleitet, wobei der vordere Teil (18a) dieser Bohrung mit dem Innenvolumen (5) des Hauptzylinders verbunden ist, einem schnellen Kolben (17b), der einen kleineren Querschnitt hat als der Reaktionskolben und in dichter Weise in einer Bohrung (18b) mit entsprechendem Durchmesser des Primärkolbens gleitet, und mit einer Verhältnissteuerung (T), die von einem Verteilertauchkolben (10) betätigt wird, der selbst von dem Organ (4) zur manuellen Steuerung angetrieben wird, wobei die Baugruppe so angeordnet ist, dass bei einer Schnellbremsung die hydraulische Reaktion nur auf den kleinen Querschnitt des schnellen Kolbens ausgeübt wird, **dadurch gekennzeichnet, dass** der Reaktionskolben (17a) und der schnelle Kolben (17b) ein und denselben gestuften Kolben (17) bilden, der einen Abschnitt mit großem Querschnitt (17a) und einen Abschnitt mit kleinem Querschnitt (17b) aufweist, wobei der Abschnitt mit großem Querschnitt (17a) mit der entsprechenden Bohrung (18) des Primärkolbens eine ringförmige Kammer (27) mit einem Volumen definiert, das in Abhängigkeit von der Verlagerung des gestuften Kolbens (17) in Bezug auf den Primärkolben (3) variabel ist, und dass durch die Verlagerung des gestuften Kolbens (17) gesteuerte Mittel (28, 29, 30) zur TrennungNerbindung vorgesehen sind, damit der Flüssigkeitsdruck auf den großen Querschnitt (17a) des gestuften Kolbens ausgeübt wird, wenn sich dieser in seiner Ruhestellung oder hinter dieser Stellung befindet, und einzig auf den kleinen Querschnitt (17b) ausgeübt wird, wenn der gestufte Kolben bei einer Schnellbremsung in Bezug auf den Primärkolben (3) nach vorne bewegt wird.

2. Bremsvorrichtung nach Anspruch 1, **dadurch gekennzeichnet, dass** die Mittel zur Trennung/Verbindung zwischen dem großen und dem kleinen Querschnitt ein Trennmittel (30) aufweisen, das mit dem Primärkolben (3) verbunden ist.

3. Bremsvorrichtung nach Anspruch 1 oder 2, **dadurch gekennzeichnet, dass** die Mittel zur Trennung/Verbindung eine Sackbohrung (28) aufweisen, die in dem gestuften Kolben vorgesehen und nach vorne offen ist, wobei diese Sackbohrung an ihrem inneren Ende über mindestens ein Loch (29) mit dem Umfang des Kolbens mit kleinem Querschnitt (17b) verbunden ist, während ein mit dem Primärkolben (3) verbundenes Dichtmittel (30) in der ringförmigen Kammer (27) um den Kolben mit kleinem Querschnitt (17b) vorgesehen ist, um mit dem Loch/den Löchern (29) des Kolbens mit kleinem Querschnitt zusammenzuwirken.

4. Bremsvorrichtung nach Anspruch 3, **dadurch gekennzeichnet, dass** das Dichtmittel durch eine Dichtung (30) mit Lippe (32) gebildet ist.

5. Bremsvorrichtung nach einem der Ansprüche 1 bis 4, **dadurch gekennzeichnet, dass** sich der Abschnitt mit großem Querschnitt (17a) des gestuften Kolbens im vorderen Teil und sich der Abschnitt mit kleinem Querschnitt (17b) im hinteren Teil befindet.

6. Bremsvorrichtung nach Anspruch 5, **dadurch gekennzeichnet, dass** der Abschnitt mit kleinem Querschnitt (17b) einen Absatz (21) aufweist, an den eine Scheibe (24) axial in Anlage gelangen kann, die als Anlage für eine Druckfeder (25) dient, deren anderes Ende an einem in einer Aufnahme (22) des Primärkolbens verankerten Anschlag (26) anliegt.

7. Bremsvorrichtung nach einem der vorhergehenden Ansprüche, **dadurch gekennzeichnet, dass** sich der Kolben mit kleinem Querschnitt (17b) über eine Stange (T) mit kleinerem Durchmesser zum Verteilertauchkolben (10) fortsetzt.

8. Bremsvorrichtung nach Anspruch 7, **dadurch gekennzeichnet, dass** im Ruhezustand ein Freiraum zwischen dem hinteren Ende der Stange (T) und dem Verteilertauchkolben (10) besteht.

9. Bremsvorrichtung nach einem der vorhergehenden Ansprüche, **dadurch gekennzeichnet, dass** sich eine Druckfeder (19) an den Abschnitt mit großem Querschnitt (17a) des gestuften Kolbens (17) und an einen geschlitzten Ring (20) abstützt, der in einer Nut der Bohrung (18) des Primärkolbens (3) verankert ist.
